# DEMANDE DE BREVET EUROPEEN

(11) **EP 0 646 788 A1**
(43) Date de publication de la demande: **05.04.1995**
(21) Numéro de dépôt: 94830443.1
(22) Date de dépôt: 21.09.1994
(51) Int. Cl.: G01N 27/16

(54) **Appareil électronique pour la détection de gaz inflammables**

(30) Priorité: 21.09.1993 IT FI930182
(71) Demandeur: CONTROFUGAS S.R.L., I-50121 Firenze (IT)
(72) Inventeur: Conte, Franco Maria, I-50133 Firenze (IT); Ferraro, Roberto, I-50126 Firenze (IT)
(74) Mandataire: Martini, Lazzaro

(57) **Abrégé**

Appareil pour la détection de gaz inflammable comprenant un capteur (3) du type à spirale réalisée avec un fil en alliage de platine, dans lequel ledit capteur (3) est relié à une alimentation (1) à courant constant par l'intermédiaire d'un régulateur de courant (2): ledit régulateur (2) étant asservi à une unité (4) de contrôle du courant d'excitation du capteur (3) et de conversion D/A d'un signal de correction généré par un microprocesseur (6) connecté à cette unité et auquel est transmis le signal de sortie du capteur (3) après conversion analogique/digitale de ce signal au moyen d'un convertisseur A/D (7).

## Description

La présente invention a pour objet un appareil électronique pour la détection de gaz inflammables, en particulier du type avec capteur constitué d'un fil en spirale en alliage de platine.

Il est connu, d'après le brevet d'invention IT 1.167.878, un appareil de détection de gaz inflammables comprenant un capteur, en forme de spirale étroite constituée par un fil en alliage de platine, qui est inséré dans un circuit à pont de résistances et, par conséquent, la variation de résistance électrique du capteur en fonction de la densité du gaz qui l'entoure entraîne, dans le circuit à pont, un déséquilibre électrique qui permet d'obtenir un signal qui est utilisé pour le contrôle d'un dispositif d'alarme et/ou de déclenchement. Il est également connu, en effet, que la température du filament précité, en l'absence de gaz inflammable, est déterminée principalement par sa géométrie et par le degré d'excitation électrique à laquelle il est soumis. En présence de gaz inflammable, une combustion superficielle se développe autour du filament et provoque une augmentation de sa température. Et, puisque les variations de température du filament sont accompagnées de variations correspondantes de la résistance électrique de ce dernier, le déséquilibre mentionné ci-dessus se produit.
Mais, d'après les nombreux essais effectués, il s'est avéré que l'élément détecteur utilisé présente une sensibilité variable en fonction de la variation de la tension électrique de fonctionnement: la valeur de cette tension étant fonction du type de gaz présent autour du détecteur.

Pour augmenter la sensibilité de fonctionnement du détecteur, il a été proposé de régler à l'avance la tension aux bornes du détecteur, inséré dans un circuit électrique à pont, sur la valeur de sensibilité maximum en fonction du type de gaz qui doit être détecté et ainsi, d'utiliser les signaux fournis par ledit circuit en présence de gaz pour amener la cathode d'une diode à la valeur de seuil et, simultanément, pour mettre deux diodes en conduction et un relais de signalisation et/ou de commande en excitation. Tout ceci a formé l'objet du brevet d'invention IT 1.198.606.
Mais la configuration complètement analogique de cet appareil connu, le vieillissement que subit inévitablement le détecteur dans le temps et la sensibilité réduite de ce dernier ne permettent pas d'obtenir un rapport signal/bruit suffisant pour garantir la fiabilité maximale de fonctionnement.

Le but principal de la présente invention est d'éliminer les inconvénients précités et de proposer un appareil électronique en configuration analogique-digitale qui permette d'exalter l'augmentation de température du capteur en présence de gaz inflammable, tout en maintenant inaltérées toutes les autres caractéristiques de susceptibilité envers les autres causes d'altération de l'état actuel du capteur, de manière à obtenir l'optimisation du rapport signal/bruit.

Un autre but de l'invention est de permettre la mémorisation des étalonnages effectués sur le capteur en fonction des conditions ambiantes spécifiques et d'une utilisation possible, même dans l'état avec le capteur désactivé.

Ce résultat a été atteint, conformément à l'invention, en adoptant l'idée de réaliser un appareil comprenant un capteur du type à spirale réalisée avec un fil en alliage de platine et comprenant:
- des moyens pour l'alimentation à courant constant dudit capteur;
- des moyens pour convertir le signal électrique généré par le capteur de signal analogique en signal digital et pour sa transmission à un microprocesseur de gestion des états de fonctionnement normal - pré-alarme - alarme;
- des moyens pour le contrôle de l'alimentation du capteur, lesquels sont asservis à un générateur d'un signal électrique stable de référence et au microprocesseur précité pour la correction programmée du niveau d'excitation actuel du capteur;
- des moyens de signalisation acoustique et lumineuse de la condition d'atmosphère normale - pré-alarme - alarme et d'activation d'organes électromécaniques d'intervention d'urgence appropriés.

Les avantages obtenus grâce à la présente invention consistent essentiellement en ce qu'il est possible d'exalter l'augmentation de température du capteur en présence de gaz inflammables, principalement grâce à l'alimentation à courant constant de ce dernier et d'augmenter le rapport signal/bruit correspondant, de manière à détecter la présence de gaz inflammable même avec une faible concentration, et avec la fiabilité maximale; en ce qu'il est possible d'informer le microprocesseur sur la fonction de vieillissement dans le temps du capteur et de corriger ainsi, au fur et à mesure, automatiquement, le niveau d'excitation du filament et le seuil d'intervention des moyens de pré-alarme et d'alarme, de manière à prolonger la vie utile du capteur et à empêcher que son vieillissement ne produise des effets négatifs sur le bon fonctionnement de l'appareil; en ce qu'il est possible de détecter la présence de courants d'air autour du capteur, ainsi que d'autres conditions de fonctionnement anormal; en ce qu'il est possible de mesurer des paramètres thermodynamiques intéressants pour la détection du gaz, comme par exemple la température ambiante et le degré d'humidité, perturbation qui s'ajoute au bruit électrique du circuit, de manière à corriger opportunément la réponse du capteur et à n'émettre, dans chaque condition d'utilisation, une signalisation qui corresponde à l'état d'alarme que lorsque la concentration du gaz est égale à celle prédéterminée et mémorisée en phase d'étalonnage de l'appareil; en ce que le présent appareil possède un degré de souplesse élevé grâce à la présence du microprocesseur intelligent utilisé pour la gestion de ses fonctions; en ce qu'il est possible d'étalonner l'appareil en fonction des conditions ambiantes spécifiques et d'une éventuelle utilisation par l'intermédiaire d'étalonnages de type digital, et non pas analogiques, lesquels sont mémorisés et conservées même lorsque le détecteur est désactivé et permettent une grande précision de fonctionnement.

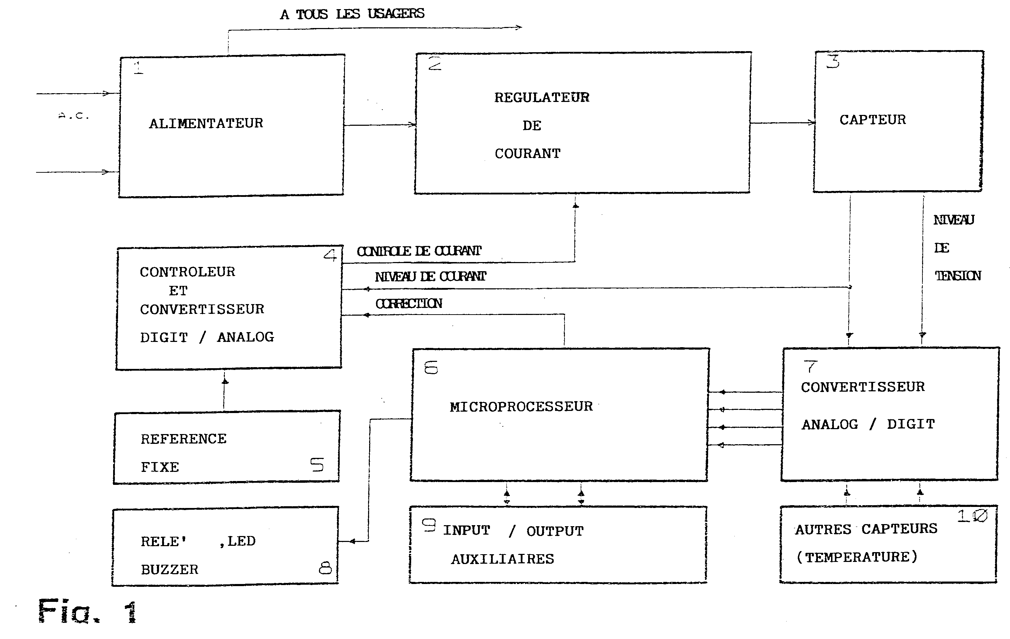

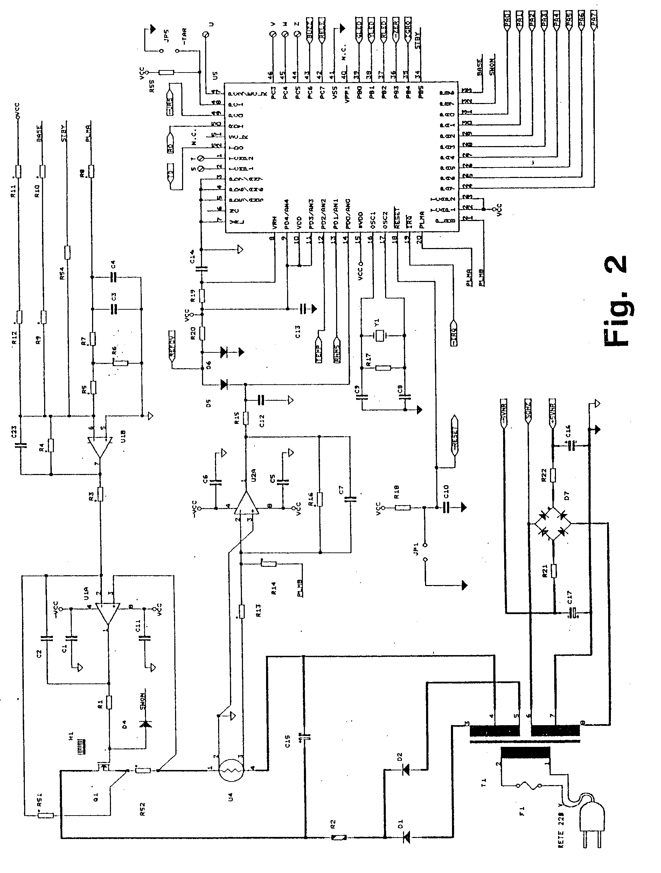

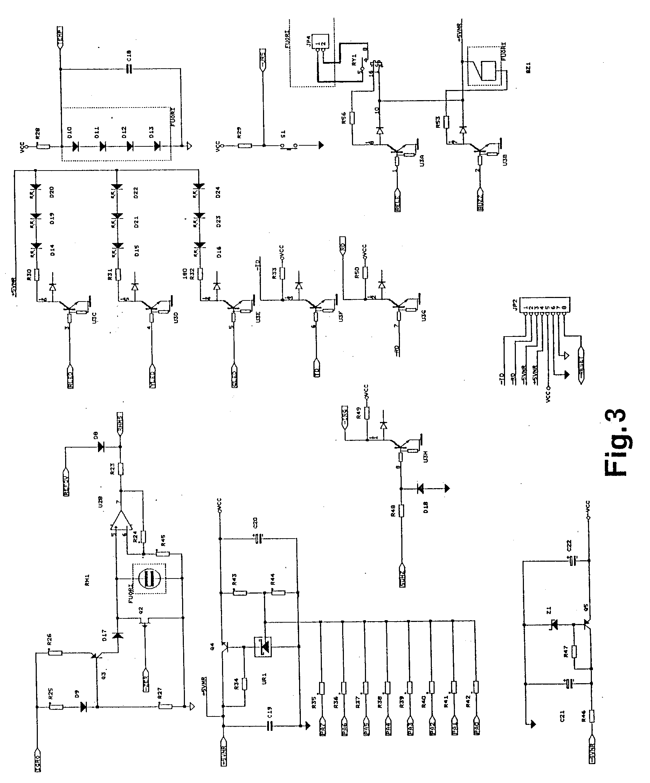

Ces avantages et caractéristiques de l'invention ainsi que d'autres seront plus et mieux compris de chaque homme du métier à la lumière de la description qui va suivre et à l'aide des dessins annexés donnés à titre d'exemplification pratique de l'invention, mais à ne pas considérer dans le sens limitatif; dessins sur lesquels: Fig. 1 représente le bloc-diagramme fonctionnel d'un appareil conformément à l'invention; Fig. 2 représente le schéma électrique partiel de l'appareil de la Fig. 1 selon une forme de réalisation préférée; Fig. 3 représente le schéma électrique complémentaire de l'appareil de la Fig. 2.

Réduit à sa structure essentielle et en référence à la Fig. 1 des dessins annexés, un appareil pour la détection de gaz inflammable conformément à l'invention comprend un capteur (3) du type à spirale réalisée avec un fil en alliage de platine, lequel est relié à une alimentation (1) à courant constant par l'intermédiaire d'un régulateur de courant (2): ledit régulateur (2) étant asservi à une unité (4) de contrôle du courant d'excitation du capteur (3) et de conversion D/A d'un signal de correction généré par un microprocesseur (6) connecté à cette unité. L'unité (4) est maintenue à son tour au régime par un générateur d'un signal de référence fixe et prédéterminé (5). Un convertisseur A/D (7) est connecté en cascade avec le capteur (3) pour transmettre au microprocesseur (6) le signal de sortie correspondant après conversion analogique/digitale de ce signal. Une sortie du microprocesseur (6) est reliée à une entrée correspondante de l'unité (4), de manière à permettre une correction prédéterminée du niveau d'excitation du capteur (3) en fonction de la variation de l'état actuel de vieillissement de celui-ci. Ledit microprocesseur est également relié à un groupe (8) comprenant plusieurs Leds et au-moins une sonnerie à vibreur pour la signalisation acoustique et lumineuse de la condition d'atmosphère normale / pré-alarme / alarme et pour l'activation d'un relais destiné à la commande d'organes d'intervention d'urgence appropriés, comme par exemple une ou plusieurs électrovannes de blocage de l'approvisionnement du gaz et/ou un ou plusieurs ventilateurs pour l'évacuation du gaz accumulé dans le milieu dans lequel le capteur (3) est installé.

Avantageusement, conformément à l'invention, ledit microprocesseur (6) est relié, par l'intermédiaire du convertisseur (7), à un groupe (10) de capteurs destinés à mesurer des paramètres thermodynamiques concernés, comme par exemple la température, le degré d'humidité de l'air ambiant, la concentration de fumées et/ou de particules gazeuses combustibles occasionnelles, de manière à permettre l'évaluation du bruit qui en dérive et corriger ainsi de manière appropriée la réponse du capteur (3). De cette manière, il est possible de fournir la signalisation de l'état d'alarme uniquement en présence d'une concentration de gaz correspondant à une condition de danger effectif.
Par ailleurs, avantageusement, ledit convertisseur (7) est du type à configuration logométrique, de manière à augmenter ultérieurement la précision de fonctionnement du système.

Avantageusement, conformément à l'invention, ledit microprocesseur (6) comporte une ou plusieurs sections d'entrées/sorties auxiliaires (9) pour permettre sa connexion avec des organes d'information correspondants, par exemple en phase d'étalonnage de l'appareil, ou pour la connexion en réseau de ce dernier avec d'autres systèmes d'alarme et/ou avec des capteurs auxiliaires d'autre nature et/ou avec un ordinateur électronique externe et ainsi de suite.
Le fonctionnement de l'appareil décrit est le suivant.
Du fait que le capteur (3) est traversé par un courant constant, la tension à ses bornes s'avère directement proportionnelle à la variation de la résistance électrique qui se produit à la suite de chaque variation de température survenant autour du filament de platine. Cette tension, traitée de manière appropriée, est convertie en grandeur digitale par l'unité (7) et, ensuite, transmise au microprocesseur (6). Ce dernier reçoit également les signaux provenant du groupe de capteurs (10), correctement convertis en grandeur digitale au moyen de la même unité (7). Les corrections imposées par le microprocesseur (6) sont traduites en variations du courant d'excitation du capteur (3) par l'intermédiaire de l'unité de conversion et de contrôle (4) reliée au régulateur (2). En outre, le microprocesseur (6) intervient sur l'unité (4), et ainsi sur l'alimentation du capteur (3), également en fonction de l'état actuel de vieillissement de ce dernier, de manière à faire varier dans le temps le seuil de déclenchement des moyens (8) dont le seuil est prédéterminé sur la base de la valeur de tension mesurée aux bornes du capteur (3) et sur la base d'une fonction de vieillissement de ce capteur (3) qui est programmée en se fondant sur des informations connues et concernant son comportement dans le temps. De cette manière, il s'avère possible de limiter l'utilisation du capteur (3) de manière à prolonger sa durée de fonctionnement. L'activation de l'état de pré-alarme se produit lorsque la variation de tension mesurée aux bornes du capteur (3), en raison d'une accroissement de la température autour de ce dernier, s'avère supérieure à une valeur prédéterminée, de celle correspondant au bruit propre du circuit électrique ajouté au bruit produit à cause de perturbations extérieures et relevées par le groupe (10), comme par exemple l'humidité de l'air, des fumées, des particules gazeuses combustibles occasionnelles et ainsi de suite. L'état d'alarme et de déclenchement des moyens d'intervention d'urgence - par exemple le relais du groupe (8) - se produit lorsque la valeur moyenne calculée des signaux d'altération du capteur (3) est supérieure à une valeur prédéterminée: ledit calcul de la moyenne étant basée sur une fonction statistique prédéterminée. Ceci permet d'obtenir de la part du système une réponse hautement fiable, du fait que la moyenne statistique ainsi calculée permet de sélectionner les signaux de danger effectif qui correspondent à des concentrations de gaz supérieures au limites autorisées, parmi toutes celles générées de toute façon par le capteur (3). La fonction de préalarme, inversement, étant activée sur la base des valeurs instantanées, c'est-à-dire sans calcul de la moyenne, du signal émis par le capteur (3), permet de détecter de toute façon le dépassement instantané des valeurs limites prédéterminées. Il va de soi que, de cette manière, cela rend possible, d'une part, la signalisation de toute éventuelle concentration anormale de gaz autour du capteur et, d'autre part, la signalisation de l'état d'alarme avec l'activation simultanée des moyens d'intervention d'urgence, ne se produit qu'en cas de danger effectif.

L'activation initiale de l'appareil s'effectue de la manière suivante. Après la mise sous tension, le microprocesseur (6) effectue une série de vérifications fonctionnelles visant à établir les conditions de bon fonctionnement des différents composants des circuits et commande la signalisation acoustique et lumineuse des éventuelles anomalies relevées, après quoi il commande l'alimentation du capteur (3) de manière à amener son filament à la température prescrite et contrôle la stabilité de son point de travail. L'absence d'anomalies vérifiables au cours de cette opération est opportunément mise en évidence par l'émission d'un signal lumineux correspondant. De manière analogue, l'obtention de la condition de stabilité et le contrôle de la pertinence des valeurs relevées avec les valeurs de référence prescrites sont signalés par l'émission d'un signal acoustique. De même, la fin de l'initialisation de l'appareil et le début de l'état de fonctionnement de celui-ci sont signalés par l'émission de signaux acoustiques et lumineux correspondants.

En référence au schéma électrique représenté sur les Fig. 2 et 3 des dessins annexés, les valeurs des composants principaux de l'appareil, utilisés dans une forme concrète de réalisation considérée, sont indiquées ci-après:
- BZ1: SONNERIE KPE 242
- C1,C5,C6,C11,C19: 100nF-J
- C2: 10nF-KT
- C3,C4,C7: 1uF-KT
- C8,C9: 18pF
- C10,C13,C14,C18: 1uF-J
- C12: 100nF-KT
- C15: 330uF 16V
- C16,C17: 220uF 16V
- C20,C22: 10uF-T
- C21: 470uF 16V
- C23: 33pF
- D16,D23,D24: LED VERTES
- D1,D2: 1N4002
- D4,D5,D6,D8,D9,D10,D11,D12,D13,D17,D18: 1N4148
- D7: WLO1F
- D14,D19,D20: LED ROUGES
- D15,D21,D22: LED JAUNES
- F1: Fusible
- H1: Dissipateur
- J1: SECTEUR 220 V
- JP1,JP5: PONTAGE
- JP2: Connecteur à 6 pôles
- JP4: BORNES EXT
- Q1: IRLZ14
- Q2: J177
- Q3: BC307C
- Q4: BC337
- Q5: BC327
- R2: 3 Ohm 5W
- R3: 48K7
- R4: 487K
- R5: 280K
- R6: 340K
- R7,R8,R16,R26: 1M
- R9,R10: 619K
- R11,R12: 931K
- R13: 12K7
- R14: 30K1
- R15,R23: 4K7
- R17: 10M
- R18: 100K
- R19: 470
- R1: 2K2
- R20: 680
- R21,R22: R
- R24,R45: 10K
- R25: 200K
- R27: 698K
- R28: 169K
- R29,R49,R50,R55: 10K
- R30,R31,R32: 180
- R33: 1K
- R34: 560
- R35: 3K32
- R36: 6K65
- R37: 13K3
- R38: 26K7
- R39: 53K6
- R40: 107K
- R41: 210K
- R42: 422K
- R43: 240
- R44: 237
- R46: 68
- R47: 330
- R48: 47K
- R51: 2K49
- R52: 0,25 Ohm
- R53: R SONNERIE
- R54: 2M2
- R56: 82 Ohm
- RH1: CAPTEUR HUMIDITE
- RY1: FEME JF B100 6
- S1: BOUTON MISE A ZERO
- T1: TRANSFORMATEUR
- U1,U2: TLC2202
- U3: L603
- U4: PT1,73
- U5: MC68HCO5B6
- U7: Test p.U
- U8: Test p.V
- U9: Test p.W
- U10: Test p.Z
- U11: Test p.S
- U12: Test p.T
- UR1: TL431
- Y1: 4MHz
- Z1: 4,3V 0,4W
Dans la pratique, les détails de réalisation peuvent cependant varier de manière équivalente dans la forme, les dimensions, la disposition des éléments, la nature des matériaux utilisés, sans pour autant sortir du cadre de l'idée de solution adoptée et, par conséquent, en restant dans les limites de la protection accordée par le présent brevet pour invention industrielle.

Avantageusement, conformément à l'invention, le bloc-diagramme de la Fig. 1 peut être réalisé en plusieurs modules avec les interconnexions correspondantes.
Ceci permet une intervention plus rapide en cas de réparation.

## Revendications

1. Appareil pour la détection de gaz inflammable comprenant un capteur (3) du type à spirale réalisée avec un fil en alliage de platine, caractérisé en ce que ledit capteur (3) est relié à une alimentation (1) à courant constant par l'intermédiaire d'un régulateur de courant (2): ledit régulateur (2) étant asservi à une unité (4) de contrôle du courant d'excitation du capteur (3) et de conversion D/A d'un signal de correction généré par un microprocesseur (6) connecté à cette unité et auquel est transmis le signal de sortie du capteur (3) après conversion analogique/digitale de ce signal au moyen d'un convertisseur A/D (7).

2. Appareil selon la revendication 1, caractérisé en ce que ladite unité (4) est maintenue au régime par un générateur d'un signal de référence fixe et prédéterminé (5).

3. Appareil selon la revendication 1, caractérisé en ce qu'une sortie du microprocesseur (6) est reliée à une entrée correspondante de l'unité (4), de manière à permettre une correction prédéterminée du niveau d'excitation du capteur (3) en fonction de la variation de l'état actuel de vieillissement de celui-ci.

4. Appareil selon la revendication 1, caractérisé en ce que ledit microprocesseur (6) est relié à un groupe opérationnel (8) comprenant plusieurs Leds et au-moins une sonnerie à vibreur pour la signalisation acoustique et lumineuse de la condition d'atmosphère normale / pré-alarme / alarme et pour l'activation d'un relais destiné à la commande d'organes d'intervention d'urgence prédéterminés.

5. Appareil selon la revendication 4, caractérisé en ce que lesdits organes d'intervention d'urgence comprennent une ou plusieurs électrovannes de blocage de l'approvisionnement du gaz et/ou un ou plusieurs ventilateurs pour l'évacuation du gaz accumulé dans le milieu dans lequel le capteur (3) est installé.

6. Appareil selon la revendication 1, caractérisé en ce que ledit microprocesseur (6) est relié, par l'intermédiaire du convertisseur (7), à un groupe (10) de capteurs destinés à mesurer la température, le degré d'humidité de l'air ambiant, la concentration de fumées et/ou de particules gazeuses combustibles occasionnelles et/ou d'autres paramètres thermodynamiques concernés, de manière à permettre l'évaluation du bruit qui en dérive et corriger ainsi de manière appropriée la réponse du capteur (3).

7. Appareil selon la revendication 1, caractérisé en ce que ledit convertisseur (7) est du type à configuration logométrique.

8. Appareil selon la revendication 1, caractérisé en ce que ledit microprocesseur (6) comporte une ou plusieurs sections d'entrées/sorties auxiliaires (9) pour permettre sa connexion avec des organes d'information correspondants ou pour la connexion en réseau de ce dernier avec d'autres systèmes d'alarme et/ou avec des capteurs auxiliaires d'autre nature et/ou avec un ordinateur électronique externe.

9. Appareil selon la revendication 1, caractérisé en ce que ledit microprocesseur (6) est du type MC68HCO5B6.

10. Appareil selon la revendication 1, caractérisé en ce que ledit microprocesseur (6) est programmable de manière à activer l'état de préalarme du système lorsque, aux bornes du capteur (3), il se produit une variation de tension supérieure à une valeur prédéterminée.

11. Appareil selon la revendication 1, caractérisé en ce qu'il est programmable de manière à activer l'état d'alarme du système lorsque la valeur moyenne calculée des signaux d'altération du capteur (3) est supérieure à une valeur prédéterminée: ledit calcul de la moyenne étant basée sur une fonction statistique prédéterminée.

12. Appareil selon la revendication 1, caractérisé en ce qu'il possède un schéma électrique tel qu'il est représenté sur les Fig. 1 et 2 des dessins annexés.

13. Appareil selon la revendication 1, caractérisé en ce que ledit schéma électrique est réalisé en plusieurs modules avec les interconnexions correspondantes.
